# EUROPEAN PATENT APPLICATION

(11) **EP 4 443 595 A1**
(43) Date of publication of application: **09.10.2024**
(21) Application number: 23855187.3
(22) Date of filing: 18.08.2023
(51) Int. Cl.: H01M 10/0587, H01M 50/46, H01M 10/052

(54) **JELLY-ROLL TYPE ELECTRODE ASSEMBLY AND METHOD FOR MANUFACTURING SAME**

(30) Priority: 18.08.2022 KR 20220103626; 17.08.2023 KR 20230107460
(71) Applicant: LG Energy Solution, Ltd., Seoul 07335 (KR)
(72) Inventor: CHOI, Hyun, Daejeon 34122 (KR)
(74) Representative: Goddar, Heinz J.
(86) International application number: PCT/KR2023/012274
(87) International publication number: WO 2024/039221

(57) **Abstract**

The present invention relates to a jelly-roll type electrode assembly including a first separator sheet, a first electrode sheet, a second separator sheet, and a second electrode sheet sequentially arranged in a stack that is wound with the first separator sheet being located at the innermost side of the wound stack and the first electrode sheet being located at the outermost side of the wound stack, and a corner of an inner end of the second electrode sheet that is in contact with the first separator sheet and the second separator sheet is rounded, whereby it is possible to prevent damage to the separator sheet by a positive electrode sheet expanding during a charging and discharging process of the electrode assembly.

## Description

### [Technical Field]

This application claims the benefit of priority to Korean Patent Application No. 10-2022-0103626 filed on August 18, 2022 and Korean Patent Application No. 10-2023-0107460 filed on August 17, 2023, the disclosure of which is incorporated herein by reference in its entirety.

The present invention relates to a jelly-roll type electrode assembly including an electrode sheet having an adhesive added thereto and a method of manufacturing the same. More particularly, the present invention relates to a jelly-roll type electrode assembly capable of preventing damage to a separator sheet by curving the end of a winding start part of an electrode sheet that is less close to a winding start point, which is one of electrode sheets constituting the jelly-roll type electrode assembly, and a method of manufacturing the same.

### [Background Art]

Lithium secondary batteries may be divided into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of aluminum laminate sheet depending on the shape of a battery case.

The cylindrical secondary battery uses a jelly-roll type electrode assembly configured such that an electrode sheet and a separator sheet are wound together. Since the electrode sheet repeatedly expands and contracts during a charging and discharging process, the circumference of the jelly-roll electrode assembly may expand or the length of the electrode sheet may increase at front and rear ends thereof.

The electrode sheet is taken out from an electrode roll and is cut to a predetermined length to constitute the electrode assembly, and the cut surface of the electrode sheet may not be smooth but may be sharp. The sharp cut surface of the electrode sheet may cause damage to the separator sheet, whereby insulation of the electrode assembly may be destroyed.

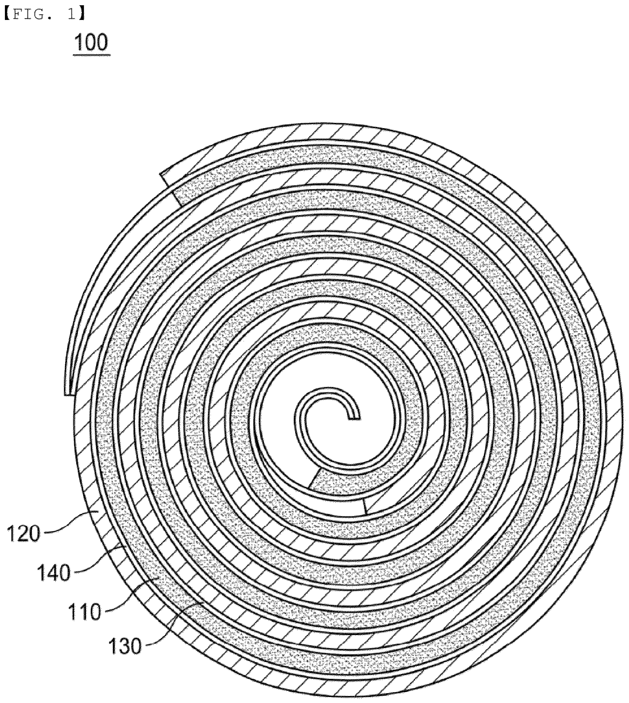

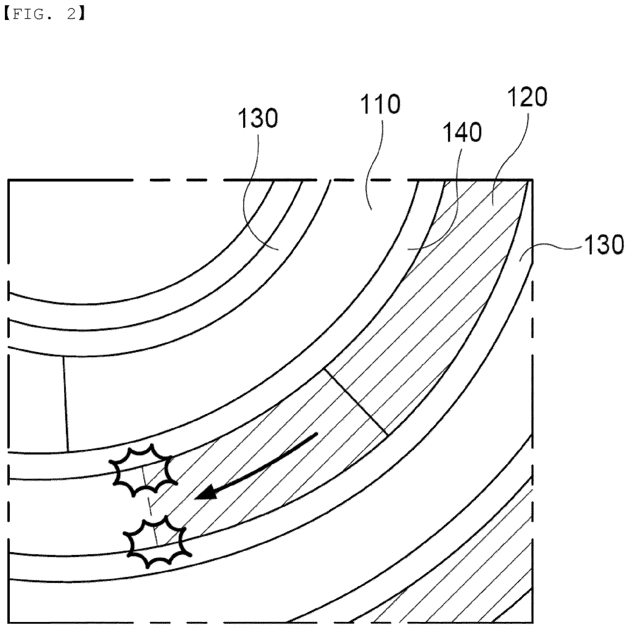

FIG. 1 is a sectional view of a conventional jelly-roll type electrode assembly, and FIG. 2 is a partial enlarged view of a central part of FIG. 1.

Referring to FIGs. 1 and 2, the jelly-roll type electrode assembly 100 is configured such that a first separator sheet 130, a first electrode sheet 110, a second separator sheet 140, and a second electrode sheet 120 are wound in a stacked state. At a winding start point of the jelly-roll type electrode assembly 100, an inner end of the first electrode sheet 110 extends farther than an inner end of the second electrode sheet 120. Depending on charging and discharging of the jelly-roll type electrode assembly 100, the second electrode sheet 120 may extend in a direction indicated by an arrow in FIG. 2 or retract again.

For reference, the first separator sheet 130 is shown as extending farther than the first electrode sheet 110 in FIGs. 1 and 2; however, ends of the first separator sheet 130 and the first electrode sheet 110 may coincide with each other, which may be changed as needed.

At this time, the cut surface of the inner end of the second electrode sheet 120 is sharpened by cutting, which may damage the first separator sheet 130 and the second separator sheet 140 in contact with the cut surface, whereby the thickness of each of the first separator sheet 130 and the second separator sheet 140 may be gradually reduced. In addition, as charging and discharging is continuously performed, the first electrode sheet 110 and the second electrode sheet 120 repeatedly expand and contract, whereby the damaged separator sheets may become thinner and thinner, and therefore holes may be formed in the separator sheets. As a result, the inner end of the second electrode sheet 120 may come into contact with the first electrode sheet 110, whereby short circuit may occur.

Since the inner end of the first electrode sheet 110, which is a winding start point thereof, extends farther inwards than the inner end of the second electrode sheet 120, which is a winding start point thereof, there is no problem of short circuit between the first electrode sheet 110 and the second electrode sheet 120 at the inner end of the first electrode sheet even though the first electrode sheet 110 contracts and expands due to charging and discharging.

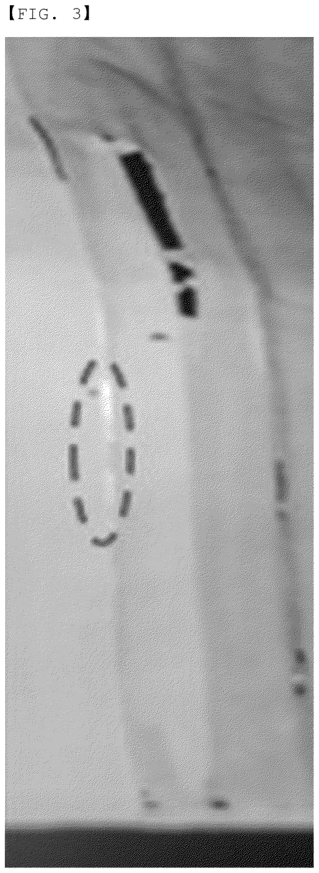

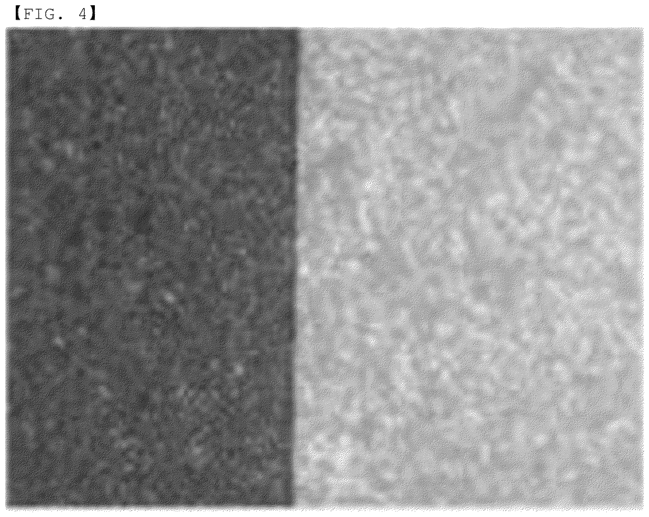

FIG. 3 is a photograph showing a winding start part of a wound jelly-roll type electrode assembly after unwinding, and FIG. 4 is a 200x enlarged photograph of an edge part of a cut positive electrode. It can be seen from FIGs. 3 and 4 that the wound jelly-roll type electrode assembly substantially has the above problem.

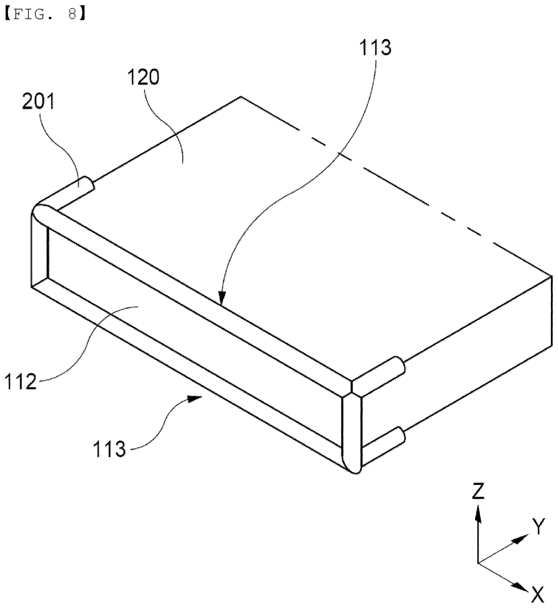

FIG. 4 is a photograph of the edge of the cut positive electrode taken from above. Compared to coordinates and reference numerals in FIG. 8, the cut surface 112 is photographed from above in a Z-axis direction. The differently colored boundary at the center corresponds to the cut surface 112, with the simple background on the right and the positive electrode on the left. It can be seen from FIG. 4 that the cut surface of the positive electrode is very sharp.

FIG. 3 is a photograph showing a winding start part of a wound jelly-roll type electrode assembly after unwinding, and it can be seen that there is a bright or white part in a dotted circle at the center. FIG. 3 is a photograph taken in the state in which a lighting device is disposed at the rear surface of the unwound electrode assembly, wherein an incised part of the separator sheet, through which light is emitted, corresponds to the bright or white part in the dotted circle. The dotted circle is the inner end of the positive electrode sheet at the winding start part of the electrode assembly. It can be seen therefrom that the separator sheet in contact with the inner end of the positive electrode sheet at the winding start part of the electrode assembly is damaged.

Patent Document 1 relates to an electrode assembly having a structure in which a positive electrode sheet and a negative electrode sheet are wound in the state in which a separator is interposed therebetween, wherein a double-sided adhesive tape is attached to an uncoated portion of the positive electrode sheet such that the separator and the positive electrode sheet are adhered to each other. In this configuration, it is possible to improve the mechanical rigidity of the separator located at a central part of the jelly-roll type electrode assembly and to prevent the problem that the positive electrode sheet or the negative electrode sheet slips due to low friction force of the separator during a winding process and comes into contact with the opposite electrode, whereby internal short circuit occurs.

Patent Document 2 discloses a configuration in which an electrode winding group is wound around a cylindrical core, and a winding start end of a separator is adhered to the cylindrical core via an acrylic-based adhesive.

In a cylindrical lithium ion battery of Patent Document 2, winding efficiency is improved because the winding start end of the separator is adhered to the core via the acrylic-based adhesive, and even though vibration is applied to the cylindrical lithium ion battery, it is possible to prevent internal short circuit caused by cutting of a lead or damage to the electrode winding group.

Patent Document 1 and Patent Document 2 disclose only fixing using an adhesive, and do not recognize, or do not provide a solution to, the problem that the separator may be damaged when the electrode sheet is wound in the state in which the cut surface of the electrode sheet is not smooth.

Patent Document 3 relates to a wound electrode assembly, wherein the edge of a negative electrode active material layer formed at an end of the electrode assembly in a lateral direction has an acute angle. In this configuration, damage to a separator due to contraction thereof is prevented. Patent Document 3 only remedies the problem of an uncoated part that can be easily observed from the outside, and does not recognize the problem inside the winding recognized in the present invention. In addition, since the thickness of the electrode active material layer is very small, it is substantially impossible to separately process the edge part so as to have an acute angle. In Patent Document 3, an acute angle is obtained using a method in which compositions applied using an application device having two application holes contacts each other while flowing in a lateral direction, which, however, is not applicable to the case of continuous application in a longitudinal direction, as in the present invention.

Damage to the separator due to the sharp cut surface of the electrode sheet at the winding center of the jelly-roll type electrode assembly and short circuit due thereto are problems that occurs as charging and discharging is continuously performed. Conventionally, however, it was only recognized that the charge and discharge lifespan is over due to degeneration of negative electrode and positive electrode materials, formation of lithium dendrites, etc.

As the result of continuous research, it has been found that the charge and discharge lifespan of the battery may be shortened even by physical damage to the separator sheet at the winding center of the jelly-roll type electrode assembly. Conventionally, as described above, the problem due to damage to the separator sheet was not recognized, and furthermore no solution thereto was suggested.

### (Prior Art Documents)

(Patent Document 1) Korean Patent Application Publication No. 2009-0027314 (2009.03.17)
(Patent Document 2) Japanese Patent Application Publication No. 2001-126769 (2001.05.11)
(Patent Document 3) Japanese Patent Application Publication No. 2015-181112 (2015.10.15)

### [Disclosure]

### [Technical Problem]

It is analyzed that, when a battery is used for a long time, the number of times of charging and discharging increases, and the aforementioned problems occur. Previous studies have recognized only the problems that occur during initial charging and discharging, and the above problems that occur during prolonged charging and discharging have simply been recognized as problems of efficiency of the battery itself or the lifespan of other materials. In the present invention, each of the parts that may be a problem in the case of prolonged charging and discharging of a secondary battery, especially a cylindrical secondary battery, has been analyzed, and it has been found that tearing of a separator sheet during prolonged charging and discharging cycles, especially damage to the separator sheet at a winding start part of a jelly-roll type electrode assembly, has a very large impact on the lifespan of the battery, and the present invention aims to solve these problems.

The present invention has been made in view of the above problems, and it is an object of the present invention to provide a jelly-roll type electrode assembly configured such that damage to a separator by a sharp cut surface of an electrode sheet at the winding center of the jelly-roll type electrode assembly is prevented, whereby short circuit is prevented, and a method of manufacturing the same.

### [Technical Solution]

An electrode assembly according to the present invention to accomplish the above object includes a first separator sheet, a first electrode sheet, a second separator sheet, and a second electrode sheet sequentially arranged in a stack that is wound with the first separator sheet being located at the innermost side of the wound stack and the first electrode sheet being located at the outermost side of the wound stack, wherein a corner of an inner end of the second electrode sheet that is in contact with the first separator sheet and the second separator sheet is rounded.

A protective resin is added to at least a part of the corner and an edge of the inner end of the second electrode sheet such that an outer surface of the protective resin may be rounded.

The protective resin may be at least one selected from the group consisting of an instant adhesive, a hot melt adhesive, and a pressure sensitive adhesive.

The protective resin may include an elastic material.

The inner end of the first electrode sheet may extend farther toward a winding center than the inner end of the second electrode sheet.

The protective resin may be further added to a cut surface of a winding start part of the second electrode sheet.

A cut surface of the inner end of the second electrode sheet may be rounded.

At least a part of the cut surface may be configured so as to have a thickness of the inner end of the second electrode sheet gradually decreasing toward the inner end.

The protective resin may not be adhered to the first separator sheet and the second separator sheet.

The first electrode sheet may be a negative electrode sheet, and the second electrode sheet may be a positive electrode sheet.

The present invention provides a cylindrical battery cell having the jelly-roll type electrode assembly received in a cylindrical battery case.

In addition, the present invention provides a method of manufacturing the jelly-roll type electrode assembly.

Specifically, the method of manufacturing the jelly-roll type electrode assembly may include (a) preparing a first separator sheet, a first electrode sheet, a second separator sheet, and a second electrode sheet, (b) applying a protective resin to a winding start part of the second electrode sheet, and (c) winding the first separator sheet, the first electrode sheet, the second separator sheet, and the second electrode sheet.

Applying the protective resin may be performed immediately after cutting the second electrode sheet.

Applying the protective resin may be performed by using a brush-like tool or by spraying the protective resin onto the cut surface.

Step (c) may be performed after the protective resin is completely dried.

The method may further include a step of cutting the first electrode sheet taken out from a first electrode roll and adding a first electrode tab or a first electrode lead thereto and a step of cutting the second electrode sheet taken out from a second electrode roll and adding a second electrode tab or a second electrode lead thereto.

In addition, the present invention may provide various combinations of the above solving means.

### [Advantageous Effects]

As is apparent from the above description, a jelly-roll type electrode assembly according to the present invention is configured such that a corner of a second electrode sheet in contact with a first separator sheet and a second separator sheet at an inner end of a winding start part of the second electrode sheet is curved, whereby a sharp or pointed part is transformed into a curved shape, and therefore it is possible to prevent damage to the separator sheet by the sharp corner or edge of the second electrode sheet.

In addition, the electrode sheets and the separator sheets are wound after a protective resin added to the inner end of the second electrode sheet is completely dried, whereby it is possible to prevent the second electrode sheet from being adhered to the separator sheets due to the protective resin. Even though the second electrode sheet expands, therefore, the separator sheets are not damaged.

The present invention solves a structural problem caused during prolonged charging and discharging cycles that has not been recognized in the past, wherein it is possible to overcome the limitation of charging and discharging cycles caused from structural problems rather than the lifespan of positive electrode and negative electrode materials, and such configurations and effects have not been recognized in the past.

### [Description of Drawings]

FIG. 1 is a sectional view of a conventional jelly-roll type electrode assembly.
FIG. 2 is a partial enlarged view of a central part of FIG. 1.
FIG. 3 is a photograph showing a winding start part of a wound jelly-roll type electrode assembly after unwinding.
FIG. 4 is a 200x enlarged photograph of an edge part of a cut positive electrode.
FIG. 5 is a perspective view of a jelly-roll type electrode assembly according to the present invention.
FIG. 6 is a sectional view of FIG. 5.
FIG. 7 is a partial enlarged view of a central part of FIG. 6.
FIG. 8 is a perspective view of a part of a second electrode sheet.
FIG. 9 is perspective views of second electrode sheets shown in FIGs. 7 and 8.
FIG. 10 is a partial enlarged view of a central part of a jelly-roll type electrode assembly including the second electrode sheet of FIG. 8.
FIG. 11 is a perspective view of a second electrode sheet having a round inner end.
FIG. 12 is an exploded perspective view of a cylindrical battery cell according to the present invention.
FIG. 13 is a schematic view showing that a protective resin is applied to a winding start part of a second electrode sheet.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, an embodiment of the present invention will be described in detail with reference to the drawings.

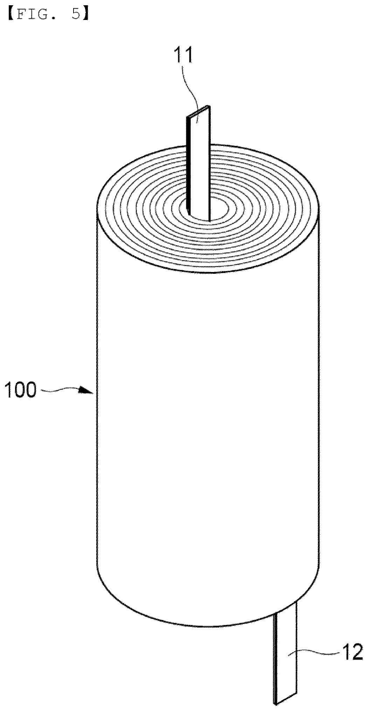

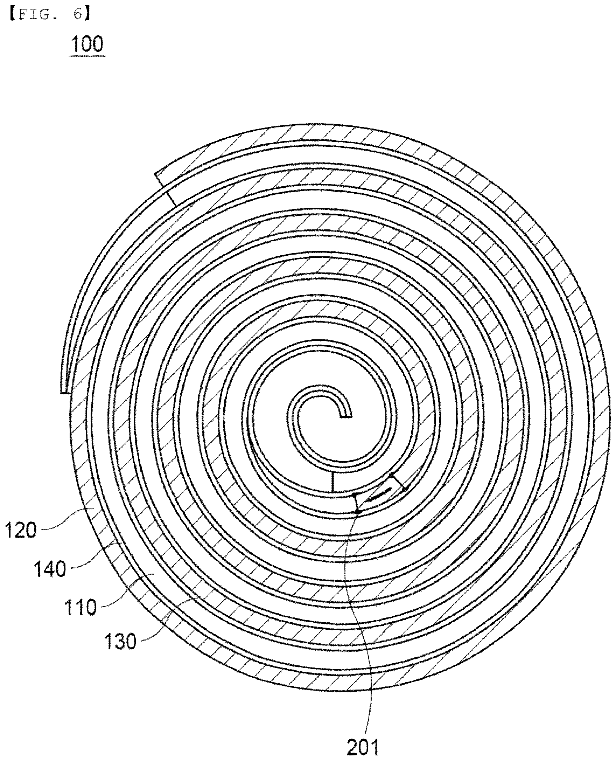

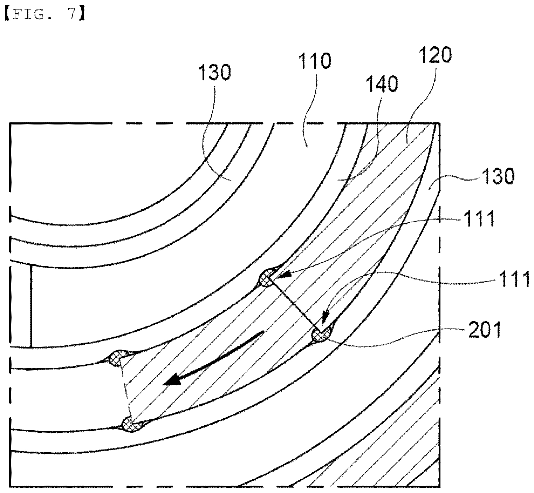

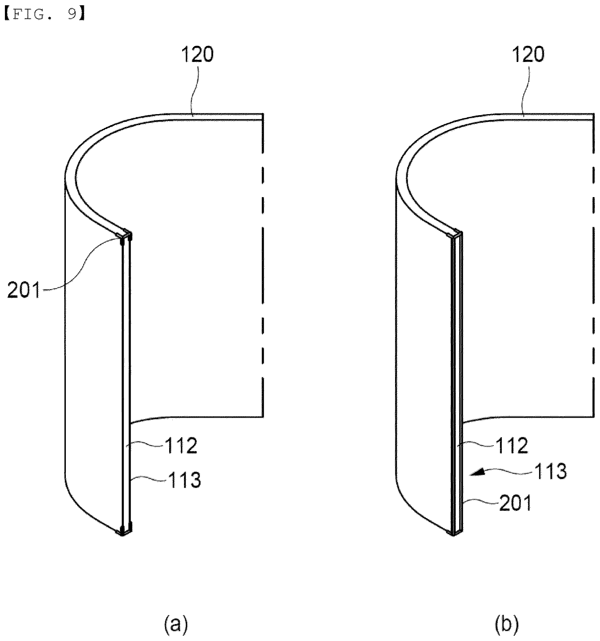

FIG. 5 is a perspective view of a jelly-roll type electrode assembly according to the present invention, FIG. 6 is a sectional view of FIG. 5, and FIG. 7 is a partial enlarged view of a central part of FIG. 6. In addition, FIG. 8 is a perspective view of a part of a second electrode sheet, FIG. 9 is perspective views of second electrode sheets shown in FIGs. 7 and 8, and FIG. 10 is a partial enlarged view of a central part of a jelly-roll type electrode assembly including the second electrode sheet of FIG. 8.

Referring to FIGs. 5 to 10, the jelly-roll type electrode assembly 100 according to the present invention is configured to have a structure in which a first separator sheet 130, a first electrode sheet 110, a second separator sheet 140, and a second electrode sheet 120 are sequentially stacked and wound such that the first electrode sheet is located at the outermost side.

FIG. 6 shows that inner ends of the first separator sheet 130 and the second separator sheet 140 coincide with each other; however, one of the first separator sheet 130 and the second separator sheet 140 may extend farther than the other, as needed, and one of the first separator sheet 130 and the second separator sheet 140 may be disposed closer to the winding center of the jelly-roll type electrode assembly 100 in a wound state.

The first electrode sheet 110 is wound in a state of being disposed so as to extend closer to the winding center, i.e., longer, than the second electrode sheet 120. A winding start point of the first electrode sheet 110, which is an inner end thereof, extends closer to the winding center than a winding start point of the second electrode sheet 120, which is an inner end thereof.

Generally, in order to manufacture the jelly-roll type electrode assembly 100, the first electrode sheet 110, which is wound on a first electrode roll, and the second electrode sheet 120, which is wound on a second electrode roll, are taken out and cut to a predetermined length, a first electrode tab 11 and a second electrode tab 12 are attached respectively to uncoated portions of surfaces of the first electrode sheet 110 and the second electrode sheet 120, each of which is not coated with an electrode mixture, and the first electrode sheet, the second electrode sheet, and the separator sheets are stacked and wound, whereby the jelly-roll type electrode assembly is manufactured.

The jelly-roll type electrode assembly may be subject to an increase or decrease in volume toward the winding center and the winding periphery during a charging and discharging process, whereby the length of the electrode sheet may be increased or decreased.

The end of the winding start part of the electrode sheet extends toward the separator sheet due to the behavior of the electrode sheet in which the volume or length of the electrode sheet is changed, whereby the separator sheet may be damaged. While it is expected that the length of each of the winding start part and the winding end part will be changed during the charging and discharging process, the damage to the separator substantially occurs at the winding start part due to the difference in curvature between the winding start part and the winding end part. This part is commonly referred to as a core free edge. The reason that the object of the present invention is to prevent the separator sheet from being penetrated at the winding start part is that the problem usually occurs at the winding start part.

In addition, during a process of cutting the first electrode sheet and the second electrode sheet using a knife, the cut surface of each of the first electrode sheet and the second electrode sheet may become sharp, and when the sharp cut surfaces of the first electrode sheet and the second electrode sheet rub against the separator sheet during the charging and discharging process, the separator sheet may be damaged. Such damage to the separator sheet may cause short circuit between different electrodes.

For example, the first electrode sheet and the second electrode sheet may be a positive electrode sheet and a negative electrode sheet, respectively, or the first electrode sheet and the second electrode sheet may be a negative electrode sheet and a positive electrode sheet, respectively. In consideration of the fact that the lengths of the separator sheet, the negative electrode sheet, and the positive electrode sheet are generally shortened in that order, the first electrode sheet 110 may be a negative electrode sheet and the second electrode sheet 120 is a positive electrode sheet in FIGS. 6 and 7.

When the winding start point of the first electrode sheet 110, which is an inner end thereof, extends toward the winding center farther than the winding start point of the second electrode sheet 120, which is an inner end thereof, and the first electrode sheet 110 is disposed closer to the winding center of the jelly-roll type electrode assembly, the first electrode sheet 110 is wound inwardly and outwardly from the winding start point of the second electrode sheet 120. When the second electrode sheet 120 contracts and expands by charging and discharging, the first separator sheet 130 and the second separator sheet 140 may be damaged if a corner 111 of the cut surface of the second electrode sheet 120, which is an inner end thereof, is sharp. When the separator sheets are repeatedly damaged, a part of each of the separator sheets may be torn, whereby short circuit may occur between the second electrode sheet 120 and the first electrode sheet 110.

In the present invention, therefore, a protective resin 201 may be added to the corner 111 of the second electrode sheet 120 in contact with the first separator sheet 130 and the second separator sheet 140 at the winding start part of the second electrode sheet, which is an inner end thereof, as shown in FIG. 7 and (a) of FIG. 9, whereby the sharp corner 11 of the inner end of the second electrode sheet 120 may be transformed into a curved shape by the protective resin 201.

Consequently, even though the second electrode sheet 120 extends in a direction indicated by an arrow and comes into contact with the first separator sheet 130 and the second separator sheet 140 during the charging and discharging process of the jelly-roll type electrode assembly, as shown in FIG. 7, it is possible to minimize damage to the first separator sheet 130 and the second separator sheet 140 because the corner 111 of the second electrode sheet 120 has a curved shape.

The first electrode sheet 110 extends farther than the second electrode sheet 120, and the second electrode sheet 120 is not present in the extension part of the first electrode sheet, and therefore there is no problem of short circuit even though the first electrode sheet 110 contracts and expands by charging and discharging.

Meanwhile, in a state of being wound into the jelly-roll type electrode assembly according to the present invention, the second electrode sheet 120 as well as the first electrode sheet 110 may be configured such that an electrode coating layer at each of opposite peripheral sides parallel to a circumferential direction is not curved but is angular.

Referring to FIG. 8 and (b) of FIG. 9, a protective resin 201 may be added to each of four directional edges 113 of a cut surface 112 at the winding start part of the second electrode sheet 120, which is an inner end thereof, and furthermore, the protective resin 201 may be added so as to extend from the cut surface 112 in a longitudinal direction Y of the second electrode sheet 120.

In the present invention, that an adhesive is added to the edges includes the case in which the adhesive is added to at least one of the edges.

In the present invention, the protective resin is added to the corners and at least some of the edges of the inner end of the second electrode sheet, as described above, and therefore angular or pointed parts may be curved.

Meanwhile, if the second electrode sheet 120 is adhered to the first separator sheet 130 and/or the second separator sheet 140 by the protective resin 201, the first separator sheet 130 and/or the second separator sheet 140 may be torn when deformation occurs due to expansion and stretching of the second electrode sheet 120. Therefore, it is preferable for the protective resin 201 not to be adhered to the first separator sheet 130 and the second separator sheet 140.

In a specific example, the protective resin may have the property of maintaining a curved surface by surface tension when added to the winding start part of the electrode sheet, not being absorbed by an electrode mixture layer of the electrode sheet, and having a fast curing rate.

For example, the protective resin may be at least one selected from the group consisting of a cyanoacrylate-based instant adhesive; a hot melt adhesive, such as an ethylene vinyl acetate-based adhesive, a polyolefin-based adhesive, a styrene block copolymer-based adhesive, a polyamide-based adhesive, a polyester-based adhesive, or a urethane-based adhesive; and a pressure sensitive adhesive, such as an acrylic resin, butyl rubber, or vinyl acetate. In order to prevent the protective resin added to the edges of the winding start part of the electrode sheet from being adhered to the first separator sheet 130 and the second separator sheet 140, however, it is preferable to use a rapidly curing instant adhesive in consideration of the fact that the electrode sheet is wound into a jelly-roll type electrode assembly after being completely dried.

Meanwhile, when the length of the second electrode sheet 120 is increased or decreased in the state in which the protective resin 201 is added to the second electrode sheet 120, it is preferable for the second electrode sheet to have less friction with the first separator sheet 130 and/or the second separator sheet 140.

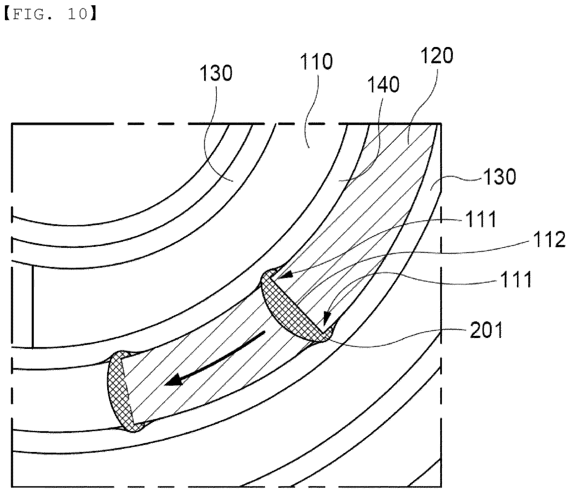

FIG. 10 is a partial enlarged view of a central part of a jelly-roll type electrode assembly including the second electrode sheet of FIG. 8.

Referring to FIG. 10, the protective resin 201 is further added to the outer surface of the cut surface 112 as well as to the corner 111 of the winding start part of the second electrode sheet 120, which is an inner end thereof.

In this case, if the protective resin 201 does not expand and contract when the first electrode sheet 110 and the second electrode sheet 120 expand and contract, the protective resin may be separated from the first electrode sheet and the second electrode sheet. For this reason, the adhesive may include an elastic material, such as urethane, rubber, or an elastic polymer.

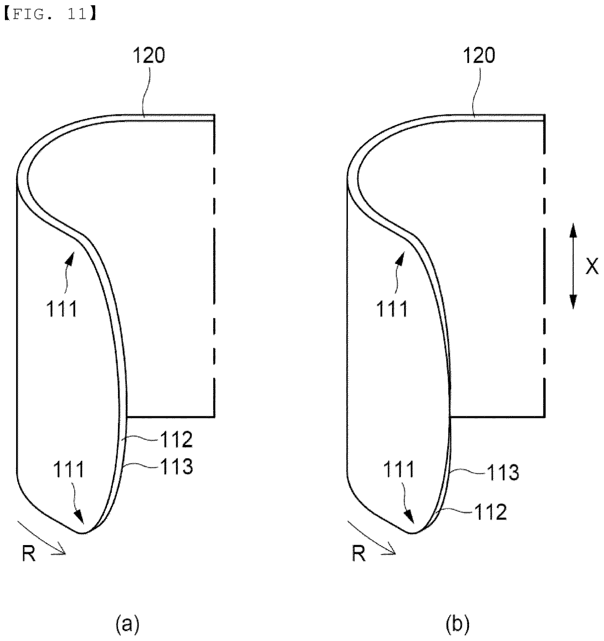

FIG. 11 is a perspective view of a second electrode sheet having a round inner end.

Referring to FIG. 11, the cut surface 112 of the inner end of the second electrode sheet 120 is curved. Specifically, the cut surface 112 of the second electrode sheet 120 shown in (a) and (b) of FIG. 11 is curved. Even though the length of the second electrode sheet 120 is increased in a circumferential direction R, therefore, there is less concern that the first separator sheet 130 and/or the second separator sheet 140 will be damaged because the corner 111 is curved and the cut surface 112 of the corner 111 is round.

Referring to (a) and (b) of FIG. 11, no protective resin is added to the inner end of the second electrode sheet 120. Even though no protective resin is added, the risk of problems such as short circuit due to damage to the separator sheet is reduced because the inner end of the second electrode sheet 120 is round.

Referring to (b) of FIG. 11, the thickness of the inner end of the second electrode sheet 120 is not uniform. Specifically, at least a part of the cut surface of the inner end of the second electrode sheet 120 may be configured so as to have a thickness gradually decreasing toward the inner end and toward the center of the second electrode sheet 120 in a lateral direction X.

Even in the case of FIG. 11, however, the protective resin shown in FIGs. 7 to 10 may be further added.

When the cut surface of the winding start point, which is an inner end, of the electrode sheet, which is one of the first electrode sheet and the second electrode sheet, which is located relatively far from the winding center of the electrode sheet, is configured to be in the form of a curved surface, as in the present invention, it is possible to prevent the separator sheet from being damaged by the electrode sheet expanding in the winding center of the jelly-roll type electrode assembly even without adding a separate member such as a protective resin, compared to the case in which the protective resin is added to the inner end. In order to transform the cut surface of the inner end of the electrode sheet into a curved surface, however, an additional process is required, which may increase the manufacturing cost and the manufacturing process.

Meanwhile, in the case of adhering a separator and a positive electrode sheet to each other by adding a double-sided adhesive tape to an uncoated portion of a double-sided sheet, as in Patent Document 1, there is a problem that the separator may be torn if the length of the separator changes with change in length of the positive electrode sheet during a charging and discharging process. In addition, when a winding start end of a separator is fixed using an adhesive, as in Patent Document 2, it is possible to stably fix the separator; however, it is not possible to prevent the separator sheet from being damaged by the cut surface of the inner end of the electrode sheet which is not smooth when the electrode sheet expands and the length of the electrode sheet is changed in the jelly-roll type electrode assembly.

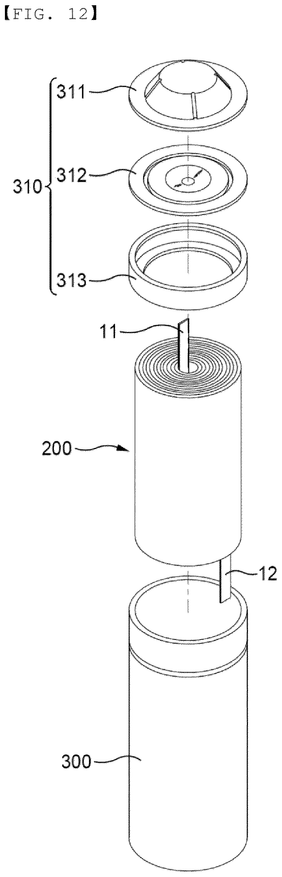

FIG. 12 is an exploded perspective view of a cylindrical battery cell according to the present invention.

Referring to FIG. 12, in the cylindrical battery cell according to the present invention, the jelly-roll type electrode assembly 100 described above is received in a cylindrical battery case 300, and a cap assembly 310 is coupled to the top of the cylindrical battery case 300, whereby the cylindrical battery case is sealed.

The cap assembly 310 includes a top cap 311 located at the uppermost end, the top cap being provided with a gas discharge hole, a safety vent 312 configured to be deformed to discharge gas when the internal pressure of the cylindrical battery case 300 increases, and a gasket 313 disposed between outer peripheries of the top cap 311 and the safety vent 312 and the cylindrical battery case 300 for sealing.

Of course, a part, such as a current blocking member, constituting a conventional cap assembly 310 may be further provided as needed.

A first electrode tab 11 is attached so as to project upwardly from the jelly-roll type electrode assembly 100, and a second electrode tab 12 is attached so as to project downwardly from the jelly-roll type electrode assembly. The first electrode tab 11 is coupled to a lower part of the cap assembly 310, and the second electrode tab 12 is coupled to an inner surface of the bottom of the cylindrical battery case 300.

FIG. 12 shows one first electrode tab and one second electrode tab; however, the number of first electrode tabs and second electrode tabs may be increased in consideration of the rate and battery capacity, and attachment positions thereof may be variously set.

A method of manufacturing a jelly-roll type electrode assembly according to the present invention may include the steps of (a) preparing a first separator sheet, a first electrode sheet, a second separator sheet, and a second electrode sheet, (b) applying a protective resin to a winding start part of the second electrode sheet, and (c) winding the first separator sheet, the first electrode sheet, the second separator sheet, and the second electrode sheet.

When the second electrode sheet is cut, the cut surface thereof may become sharp, and when the second electrode sheet comes into contact with the separator sheet, the separator sheet may be damaged. Consequently, it is preferable to add a protective resin to the corner of the second electrode sheet at the inner end thereof where the second electrode sheet comes into contact with the first separator sheet and the second separator sheet in order to soften the corner of the cut surface before the second electrode sheet damages the separator sheet. Alternatively, a protective resin may additionally be added to the edge of the cut surface or at least a part of the outer surface of the cut surface.

The step of applying the protective resin may be performed immediately after cutting the second electrode sheet, which is taken out from a second electrode roll.

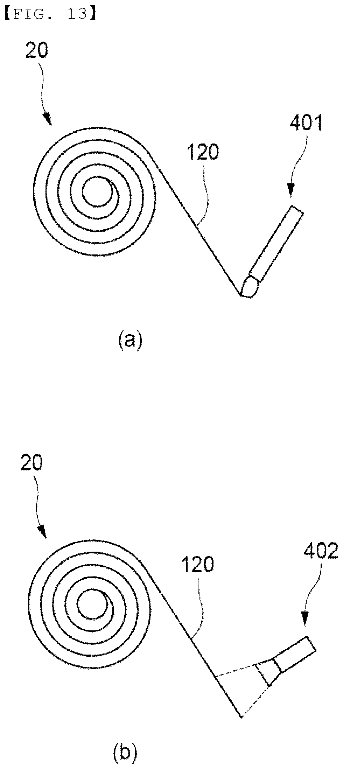

FIG. 13 is a schematic view showing that the protective resin is applied to the winding start part of the second electrode sheet.

Referring to FIG. 13, (a) shows a method of applying the protective resin to the winding start part of the second electrode sheet 120 taken out from the second electrode roll 20 using a tool formed in the shape of a brush 401, and (b) shows a method of spraying the protective resin to the winding start part of the second electrode sheet 120 taken out from the second electrode roll 20 using a sprayer 402. When the protective resin is added to the edge of the winding start part of the second electrode sheet, as described above, the corner and/or edge of the cut surface of the second electrode sheet 120 may be transformed into a curved shape. Consequently, it is possible to prevent the separator sheet between the first electrode sheet and the second electrode sheet from being damaged by the expansion and stretching of the second electrode sheet and to prevent short circuit.

The method of applying the protective resin is not limited to the method shown in FIG. 11 as long as it is possible to uniformly and rapidly apply the protective resin to the winding start part of the second electrode sheet.

In the present invention, the protective resin is added to the corner and/or edge of the cut surface of the inner end of the second electrode sheet that extends less toward the winding center of the jelly-roll type electrode assembly, and step (c) is carried out after said protective resin is completely dried. Consequently, it is possible to prevent the protective resin from being applied to the first separator sheet and the second separator sheet arranged adjacent to the second electrode sheet, and therefore the first separator sheet and the second separator sheet are not attached to the second electrode sheet.

The method of manufacturing the jelly-roll type electrode assembly according to the present invention includes a process of manufacturing a jelly-roll type electrode assembly 100 having a first electrode tab 11 and a second electrode tab 12 attached thereto, as shown in FIG. 12. Consequently, the method of manufacturing the jelly-roll type electrode assembly further includes a step of cutting a first electrode sheet taken out from a first electrode roll and attaching a first electrode tab thereto and a step of cutting a second electrode sheet taken out from a second electrode roll and attaching a second electrode tab thereto.

The first electrode tab and the second electrode tab serve as an electron movement path in the jelly-roll type electrode assembly. The second electrode tab may be a positive electrode tab, and may be coupled to a lower part of the cap assembly such that the top cap functions as a positive electrode terminal. The first electrode tab may be a negative electrode tab, and may be coupled to an inner surface of the bottom of the cylindrical battery case such that the cylindrical battery case functions as a negative electrode terminal.

Hereinafter, the present invention will be described with reference to the following examples. These examples are provided only for easier understanding of the present invention and should not be construed as limiting the category of the present invention.

### <Reference Example 1> Cut surface of positive electrode sheet

In order to manufacture a jelly-roll type electrode assembly, a positive electrode sheet was cut from a positive electrode roll, and a 200x enlarged photograph of the section of the positive electrode sheet is shown in FIG. 4.

Referring to FIG. 4, the cut surface of the positive electrode is shown in plan view. Specifically, a part of the cut surface when looking at the positive electrode sheet, such as when looking at the second electrode sheet 120 from top to bottom in a z-axis direction of FIG. 8, is shown, and the remaining part excluding the positive electrode sheet corresponds to the background.

It can be seen that the cut surface of the positive electrode sheet shown in FIG. 4 is a right-angled cut surface, not a bumpy or curved surface.

Therefore, if the jelly-roll type electrode assembly is assembled in the state in which the negative electrode sheet is disposed at the winding center without any treatment such as adding the protective resin to the cut surface of the positive electrode sheet, there is a very high risk of short circuit between the positive electrode sheet and the negative electrode sheet due to expansion and contraction of the positive electrode sheet.

### <Reference Example 2> Winding center of short-circuited jelly-roll type electrode assembly

A negative electrode sheet, a first separator sheet, the positive electrode sheet of Reference Example 1, and a second separator sheet were sequentially disposed and wound such that the negative electrode sheet was located at the winding center, an electrolytic solution was injected, and a cylindrical battery cell was assembled.

After charging and discharging the cylindrical battery cell until the cylindrical battery cell was short-circuited, the cylindrical battery cell was disassembled and the jelly-roll type electrode assembly was taken out to check for damage to the separator.

FIG. 3 is a photograph showing the winding center of the short-circuited jelly-roll type electrode assembly.

In order to check for damage to the separator sheet at the winding center of the jelly-roll type electrode assembly, a lighting device was placed behind the separator sheet and the separator sheet was observed.

In FIG. 3, a white part is observed in a dotted circle, wherein the white part is observed when light from the lighting device passes through a torn part of the separator sheet, and it can be seen that tearing of the separator sheet occurred as the result of using the positive electrode sheet of Reference Example 1, which had no treatment on the cut surface.

When the protective resin is added to the corner and/or edge of the sharp cut surface of the electrode sheet or when the cut surface is treated so as to be curved, therefore, the effect of preventing damage to the separator sheet may be significantly increased.

Those skilled in the art to which the present invention pertains will appreciate that various applications and modifications are possible within the category of the present invention based on the above description.

### (Description of Reference Numerals)

- 11:: First electrode tab
- 12:: Second electrode tab
- 20:: Second electrode roll
- 100:: Jelly-roll type electrode assembly
- 110:: First electrode sheet
- 111:: Corner
- 112:: Cut surface
- 113:: Edge
- 120:: Second electrode sheet
- 130:: First separator sheet
- 140:: Second separator sheet
- 201:: Protective resin
- 300:: Cylindrical battery case
- 310:: Cap assembly
- 311:: Top cap
- 312:: Safety vent
- 313:: Gasket
- 401:: Brush
- 402:: Sprayer

## Claims

1. A jelly-roll type electrode assembly comprising:
a first separator sheet, a first electrode sheet, a second separator sheet, and a second electrode sheet sequentially arranged in a stack that is wound with the first separator sheet being located at an innermost side of the wound stack and the first electrode sheet being located at an outermost side of the wound stack,
wherein a corner of an inner end of the second electrode sheet that is in contact with the first separator sheet and the second separator sheet is rounded.

2. The jelly-roll type electrode assembly according to claim 1, wherein a protective resin is added to at least a part of the corner and an edge of the inner end of the second electrode sheet such that an outer surface of the protective resin is rounded.

3. The jelly-roll type electrode assembly according to claim 2, wherein the protective resin is at least one selected from a group consisting of an instant adhesive, a hot melt adhesive, and a pressure sensitive adhesive.

4. The jelly-roll type electrode assembly according to claim 2, wherein the protective resin comprises an elastic material.

5. The jelly-roll type electrode assembly according to claim 1, wherein the inner end of the first electrode sheet extends farther toward a winding center than the inner end of the second electrode sheet.

6. The jelly-roll type electrode assembly according to claim 2, wherein the protective resin is further added to a cut surface of a winding start part of the second electrode sheet.

7. The jelly-roll type electrode assembly according to claim 1, wherein a cut surface of the inner end of the second electrode sheet is rounded.

8. The jelly-roll type electrode assembly according to claim 7, wherein at least a part of the cut surface is configured so as to have a thickness of the inner end of the second electrode sheet gradually decreasing toward the inner end.

9. The jelly-roll type electrode assembly according to claim 2, wherein the protective resin is not adhered to the first separator sheet and the second separator sheet.

10. The jelly-roll type electrode assembly according to claim 1, wherein
the first electrode sheet is a negative electrode sheet, and
the second electrode sheet is a positive electrode sheet.

11. A cylindrical battery cell having the jelly-roll type electrode assembly according to any one of claims 1 to 10 received in a cylindrical battery case.

12. A method of manufacturing the jelly-roll type electrode assembly according to any one of claims 1 to 10, the method comprising:
(a) preparing a first separator sheet, a first electrode sheet, a second separator sheet, and a second electrode sheet;
(b) applying a protective resin to a winding start part of the second electrode sheet; and
(c) winding the first separator sheet, the first electrode sheet, the second separator sheet, and the second electrode sheet.

13. The method according to claim 12, wherein applying the protective resin is performed immediately after cutting the second electrode sheet.

14. The method according to claim 12, wherein applying the protective resin is performed by using a brush-like tool or by spraying the protective resin onto the cut surface.

15. The method according to claim 12, wherein step (c) is performed after the protective resin is completely dried.

16. The method according to claim 12, further comprising:
cutting the first electrode sheet taken out from a first electrode roll and adding a first electrode tab or a first electrode lead thereto; and
cutting the second electrode sheet taken out from a second electrode roll and adding a second electrode tab or a second electrode lead thereto.
